Europäisches Patentamt

European Patent Office

Office européen des brevets

(19)

(11) **EP 1 049 945 B1**

(12) **EUROPÄISCHE PATENTSCHRIFT**

(45) Veröffentlichungstag und Bekanntmachung des Hinweises auf die Patenterteilung:
**20.11.2002 Patentblatt 2002/47**

(51) Int Cl.[7]: **G01S 15/10**, G01S 15/08, G01S 7/527

(21) Anmeldenummer: **98966588.0**

(22) Anmeldetag: **29.12.1998**

(86) Internationale Anmeldenummer:
**PCT/DE98/03804**

(87) Internationale Veröffentlichungsnummer:
**WO 99/038029 (29.07.1999 Gazette 1999/30)**

(54) **Verfahren zur Abstandsmessung und Durchführung des Verfahrens**

Method for distance measurement and apparatus therefor

Procédé de mesure de distance et dispositif pour la mise en oeuvre du procédé

(84) Benannte Vertragsstaaten:
**CH DE ES FR IT LI**

(30) Priorität: **24.01.1998 DE 19802724**

(43) Veröffentlichungstag der Anmeldung:
**08.11.2000 Patentblatt 2000/45**

(73) Patentinhaber: **ROBERT BOSCH GMBH**
**70442 Stuttgart (DE)**

(72) Erfinder:
 • **KLINNERT, Roland**
 **D-70825 Korntal-Münchingen (DE)**
 • **GRIMM, Wolfgang**
 **D-71229 Leonberg (DE)**
 • **SCHMIDT, Hauke**
 **D-70569 Stuttgart (DE)**
 • **WIRNITZER, Bernhard**
 **D-69502 Hemsbach (DE)**

(56) Entgegenhaltungen:
EP-A- 0 642 033          WO-A-93/06503
WO-A-97/11364          WO-A-97/28461
DE-A- 4 023 538          DE-A- 4 433 957
US-A- 4 054 862          US-A- 5 349 567
US-A- 5 631 875

**Beschreibung**

Stand der Technik

Die Erfindung betrifft ein Verfahren zur Abstandsmessung, vorzugsweise bei Kraftfahrzeugen mit Ultraschallpulsen, und eine Signal-Echo-Überwachungseinrichtung zur Durchführung des Verfahrens.

Bekannt sind verschiedenartige, als Abstandssensoren eingesetzte, Überwachungseinrichtungen, die auf verschiedenartigen physikalischen Sensorprinzipien, wie z.B. Ultraschall, Infrarot oder Mikrowelle, beruhen. So sind Abstandssensoren bekannt, bei denen von einer Auswerteinheit ein Pulssignal ausgesendet und die Zeit bis zum Eingang eines Echosignales gemessen wird. Erst danach erfolgt ein neuer Sendeimpuls. Als nachteilig erweist sich die Störanfälligkeit des Systems gegenüber gleichartigen empfangenen Signalen. Sind beispielsweise bei Verwendung von Ultraschall andere, sich in der Nähe befindende Fahrzeuge ebenfalls mit Ultraschallüberwachungseinrichtungen ausgerüstet, kann es zu Fehlinterpretationen beziehungsweise Falschmeldungen kommen. Hat ein anderes Fahrzeug beispielsweise die gleiche Pulsfolgefrequenz, kann es zu Falschmessungen kommen, ohne daß dies bemerkt wird, da die Ultraschallüberwachungseinrichtung den Empfang eines Echosignales annimmt.

Weiterhin sind die bekannten Ultraschall-Sensoren, die immer mit der gleichen Pulsfolgefrequenz arbeiten, bei mehreren Hindernissen nur eingeschränkt verwendbar, da störende Mehrfachechos oft falsch interpretiert werden. Bei Mehrfachechos sind zudem zusätzliche Wartezeiten notwendig, bevor erneut ein Sendeimpuls ausgesandt werden kann. Auch ohne solche Störungen ist mindestens die Wartezeit einzuhalten, die ein Signal benötigt, um eine maximale Distanz hin und zurück zu durchlaufen.

Aus der DE 40 23 538 A1 ist weiterhin eine Kollisionswarneinrichtung bekannt, die aufgrund eines Betriebes von zwei Sensoren und einer sogenannten Kreuzmessung zwischen Wänden, Ecken und Kanten unterscheiden kann. Nachteilig hierbei ist, daß die beiden Sensoren sequentiell betrieben werden müssen, wodurch das System relativ langsam wird. Falls sich der Gegenstand zwischen den Messungen der beiden Sensoren bewegt, kann dies zu Fehlinterpretationen führen.

Der Erfindung liegt die Aufgabe zugrunde, eine Ultraschallüberwachungseinrichtung zu schaffen, die durch eine Unterdrückung von Interferenzen von Ultraschallabstandssensoren eine schnelle Verfolgung auch von bewegten Gegenständen ermöglicht.

Aus der US 5,349,567 ist eine Sonarvorrichtung bekannt, bei der ein gesendetes Schallsignal und ein empfangenes, reflektiertes Signal auf ein matched Filter gegeben wird. Anschließend wird das von dem matched Filter ausgegebene Signal mit einem weiteren, adaptiven Filter normiert und gefiltert. In einer Ausführungsform wird dabei ein zeitliches Fenster des von dem matched Filter ausgegebenen Signals in drei Bereiche zerlegt, wobei der erste und der dritte Bereich entsprechend den Filterkoeffizienten gewichtet aufsummiert und anschließend die Differenz zu einer gewichteten Summe eines Signalbereichs gebildet wird, um einen durch ein Grundrauschen verursachten Fehler zu eleminieren. Die ermittelte Differenz wird zur Neubestimmung der Filterkoeffizienten des adaptiven Filters verwendet.

Vorteile der Erfindung

Durch ein Verfahren zur Abstandsmessung mit den in Anspruch 1 genannten Merkmalen ist eine schnelle Detektion auch von bewegten Gegenständen möglich. Dies wird durch Aussenden einer charakteristischen Signalform, z.B. eines Zufallssignals oder einer stochastischen Pulsfolge erreicht, die gemeinsam mit einem Echosignal über ein in eine Auswerteeinheit integriertes Adaptives Filter zur Bestimmung des Abstandes eines Gegenstandes von der Sendeeinheit ausgewertet wird. Dadurch ist auch eine automatische Unterdrückung jeglicher Störungen durch Einsatz des Adaptiven Filters möglich. Als vorteilhaft erweist sich auch ein gleichzeitiger Betrieb von mehreren Sensoren ohne gegenseitige Störungen durch Verwendung unterschiedlicher Zufallssignale als Sendesignale in Verbindung mit einem Adaptiven Filter. Dieses Adaptive Filter kann vorteilhaft als digitales Filter ausgeführt sein. Vorzugsweise ist das Filter ein sogenanntes FIR-(Finite-Impulse-Response-) Filter, welches nicht-rekursiv arbeitet.

Vorteilhafte Ausgestaltungen der Erfindung ergeben sich aus den in den Unteransprüchen genannten Merkmalen.

Zeichnungen

Die Erfindung wird nachfolgend in einem Ausführungsbeispiel anhand der zugehörigen Zeichnungen näher erläutert. Es zeigen:

Figur 1 ein Blockschaltbild, das den Aufbau der Ultraschallüberwachungseinrichtung zeigt;

Figur 2 ein Blockschaltbild, das die Beschaltung eines Adaptiven Filters zeigt;

Figur 3 ein Diagramm, das die Umsetzung von Zufallssignalen in binäre Werte zeigt und

Figur 4 ein Diagramm, das die Ergebnisse der Auswerteeinheit beim Betrieb von vier Störsignalen darstellt.

Beschreibung des Ausführungsbeispiels

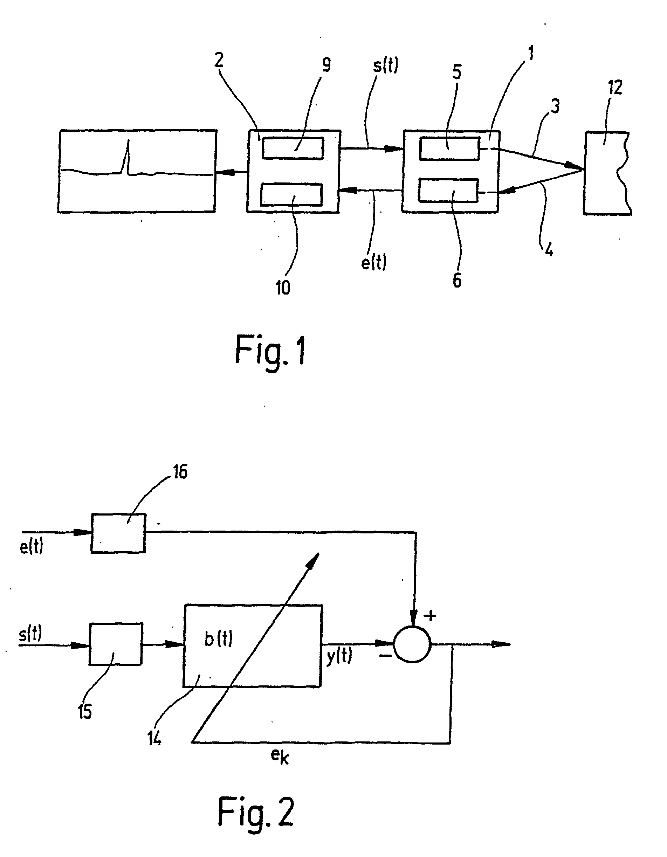

Die Figur 1 zeigt in einem Blockschaltbild den grundsätzlichen Aufbau einer erfindungsgemäßen Ultraschallüberwachungseinrichtung zur Durchführung des Verfahrens. Diese Ultraschallüberwachungseinrichtung besteht aus einer Sende- und Empfangseinheit 1 und einer Steuer- und Auswerteeinheit 2. Die Sende- und Empfangseinheit 1 weist einen Ultraschallsender 5 zur Abstrahlung von Ultraschallsignalen 3 und eine Ultraschallempfänger 6 zum Empfangen von Ultraschallechos 4 auf. Falls (wie z.B. im Puls-Echobetrieb) der Sende- und Empfangsvorgang sequentiell möglich sind, so können der Sender 5 und der Empfänger 6 interne Komponenten der Sende-Empfangseinheit 1 gemeinsam verwenden, wie z.B. die Abstrahl und Empfangsmembrane. Die Sende- und Empfangseinheit 1 setzt Sendeanforderungen aus einem Steuerteil 9 der Steuer- und Auswerteeinheit 2 in Ultraschallsignale 3 um, sendet diese mit dem Ultraschallsender 5 aus und empfängt die Echos 4 mit dem Ultraschallempfänger 6. Das empfangene Schallsignal 4 wird in der Sende- und Empfangseinheit 1 in ein elektrisches Signal umgesetzt und an eine Auswerteeinheit 10 in der Steuer- und Auswerteeinheit 2 zurückgegeben. Die Steuer- und Auswerteeinheit 2 steuert den Ultraschallsender 5 in der Sende- und Empfangseinheit 1 und bestimmt aus dem elektrischen Empfangssignal den Ort von Gegenständen 12, die sich im Sendebereich der Einrichtung befinden. Der Steuerteil 9 der Steuer- und Auswerteeinheit 2 generiert ein Zufallssignal s(t) und sendet dieses an die Sendeeinheit 5. Dem Auswerteteil 10 der Steuer- und Auswerteeinheit 2 wird das Zufallssignal s(t) zusammen mit dem elektrischen Empfangssignal e(t) zugeführt. Der Auswerteteil 10 verwendet ein sogenanntes Adaptives Filter 14, um die Verzögerung zwischen dem Sendesignal s(t) und dem Empfangssignal e(t) zu bestimmen.

Die Figur 2 zeigt ein Blockschaltbild, das die Beschaltung eines solchen Adaptiven Filters 14 darstellt. Aus der Impulsantwort b(t) des Adaptiven Filters 14 ist der Abstand des detektierten Gegenstandes 12 von dem Ort der Abgabe eines Ultraschallsignals 3 direkt entnehmbar. Das Adaptive Filter 14 gleicht seine Koeffizienten in bekannter Weise automatisch so ab, daß der Fehler f(t) zwischen dem gefilterten Signal y(t) und dem Echosignal e(t) minimiert wird. Durch diesen Abgleich wird nicht nur die Verzögerung zwischen den beiden Signalen bestimmt, sondern es kann gleichzeitig der Einfluß aller eventuell einwirkenden Störungen minimiert werden.

Das Adaptive Filter 14 wird vorzugsweise als ein Digitales Transversalfilter ausgelegt. Die Filtergleichung lautet in diesem Fall:

$$y(k \bullet D) = \sum_{i=0}^{(N-1)} b(i \bullet D) \; x \cdot ((i - k) \bullet D) \cdot$$

mit einem Abtastabstand D.

Die Anzahl der Filterkoeffizienten N liegt typischerweise zwischen 100 und 1000, je nach Auflösung und maximalen Abstand der zu detektierenden Gegenstände 12. Der Rechenaufwand für ein derartiges Filter ist relativ hoch: Bei einer Abtastfrequenz von 50 kHz und N=500 müssen entsprechend der Filterung 25 Millionen Multiplikationen und Additionen in jeder Sekunde durchgeführt werden. Die Adaption der Filterkoeffizienten bi = b(t=iD) benötigt auch bei den einfachsten Algorithmen mindestens den gleichen Rechenaufwand, also insgesamt mindestens 50 Millionen Additionen und Multiplikationen. Derartige Rechenleistungen sind jedoch mit digitalen Signalprozessoren gut darstellbar.

Das Adaptive Filter 14 minimiert automatisch den Einfluß jeglicher Art von Störungen von e(t), die nicht mit dem Signal s(t) korreliert sind. Hierzu gehören auch Temperaturdrifts oder Rauschen von Verstärkern. Die Verwendung eines Zufallssignales bewirkt, daß mehrere Kollisionswarneinrichtungen gleichzeitig arbeiten können, ohne sich gegenseitig zu stören. Bewegte Gegenstände können schneller erkannt werden, als bei bekannten Sensoren nach dem Puls-Echoprinzip. Der Grund liegt darin, daß quasikontinuierlich Schall ausgesandt wird, und ebenso kontinuierlich die Laufzeit des Schalls gemessen wird.

Die Nichtlinearitäten 15, 16 in der Auswerteeinheit 10 ermöglichen eine sehr effizient Realisierung des Adaptiven Filters 14, ohne die Robustheit der Auswerteeinheit 10 nennenswert zu beeinflussen. Der Rechenaufwand sinkt typischerweise um den Faktor 1000, womit das System preisgünstig mit Hilfe integrierter Schaltungen darstellbar wird. Als Nichtlinearitäten 15 und 16 können jeweils einfache Schwellwertbildungen verwendet werden, das heißt das Signal wird auf Eins gesetzt, falls der Signalwert größer als der Schwellwert ist und auf Null gesetzt, falls er kleiner als der Schwellwert ist. Damit werden die Signale s(t) und e(t) in weiten Bereichen Null und in der Filtergleichung entfällt ein Großteil der Multiplikationen und Additionen völlig.

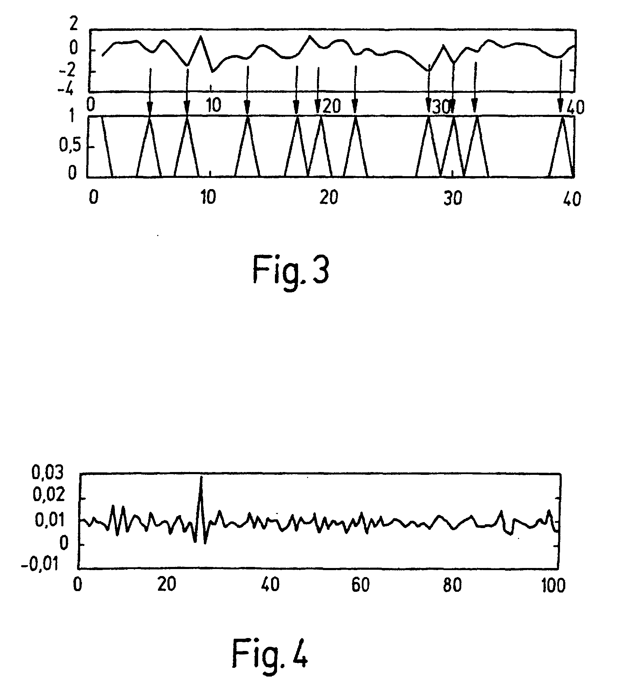

Figur 3 zeigt eine Variante, bei der weitere Einsparungen im Rechenaufwand erzielbar sind. In diesem Fall wird nur an Stellen der positiven Schwellwertdurchgänge (jeweils durch einen Pfeil gekennzeichnet) das Signal auf Eins und sonst auf Null gesetzt. Somit entfällt ein weiterer Teil der Multiplikationen und Additionen der Filtergleichung.

Die Figur 4 zeigt schließlich in einem Diagramm die Ergebnisse einer derartigen Auswerteeinheit bei gleichzeitigem Betrieb von vier Störsendern. Hierbei wurden vier Sender herkömmlicher Art, die jeweils ein gleichartiges Signal nach dem Puls-Echo-Prinzip aussenden, zum normalen Betrieb der erfindungsgemäßen Vorrichtung hinzugeschaltet. Auf der horizontalen Achse des in Figur 4 dargestellten Diagrammes sind die Indizes k der Koeffizienten bk der Filtereinheit aufgetragen. Da diese Indizes festen zeitlichen Abständen entsprechen, kann die horizontale Achse gleichzeitig als Zeitachse aufgefaßt werden. Auf der vertikalen Achse sind die Koeffizientenwerte bk aufgetragen, die sich jeweils durch die Adaption ergeben. Erkennbar ist in der Darstellung eine starke Spitze beim 25. Abtastwert. Hier beträgt der Koeffizientenwert ca. 0,03 gegenüber einem Mittelwert von 0,01 an den übrigen Stellen. Dieser 25. Abtastwert kann somit über die Schallaufzeit der Position beziehungsweise dem Abstand eines Gegenstandes 12 von der Ultraschall-Sendeeinheit 5 zugeordnet werden.

## Patentansprüche

1. Verfahren zur Abstandsmessung, vorzugsweise bei Kraftfahrzeugen mit Ultraschallimpulsen, wobei ein Signal (3) mit einer charakteristischen Signalform von einer Sendeeinheit (5) abgestrahlt wird, wobei ein von einem Gegenstand (12) reflektiertes Echosignal (4) des abgestrahlten Signals (3) von einer Empfangseinheit (6) empfangen wird, wobei das empfangene Echosignal (4) in ein elektrisches Empfangssignal (e(t)) umgesetzt wird, wobei das Sendesignal (s(t)) gemeinsam mit dem Echosignal (e(t)) über ein in das Auswerteteil (10) integriertes adaptives Filter (14) ausgewertet wird, wobei das Sendesignal (s(t)) von dem adaptiven Filter (14) gefiltert wird, wobei das adaptive Filter seine Koeffizienten ($b_K$) so abgleicht, dass der Fehler zwischen dem gefilterten Sendesignal (y(t)) und dem Empfangssignal (e(t)) minimiert wird, und wobei aus der Impulsantwort (b(t)) des adaptiven Filters (14) die Verzögerungszeit zwischen dem Sendesignal (s(t)) und dem Empfangssignal (e(t)) bestimmt wird.

2. Verfahren nach Anspruch 1, **dadurch gekennzeichnet, dass** die charakteristische Signalform des Sendesignals (s(t)) durch einen Zufallsgenerator erzeugt wird.

3. Verfahren nach einem der vorhergehenden Ansprüche, **dadurch gekennzeichnet, dass** das Sendesignal (s(t)) und das Empfangssignal (e(t)) über jeweils ein nichtlineares Transformationsglied (15, 16) geführt wird.

4. Verfahren nach Anspruch 3, **dadurch gekennzeichnet, dass** den nichtlinearen Transformationsgliedern (15, 16) ein Schwellwert vorgegeben wird, die das Sendesignal (s(t)) und das Empfangssignal (e(t)) in Binärsignale wandeln.

5. Verfahren nach Anspruch 4, **dadurch gekennzeichnet, dass** die Binärsignale nur bei positivem Schwellwertdurchgang auf den Wert 1 gesetzt werden.

6. Verfahren nach Anspruch 5, **dadurch gekennzeichnet, dass** das Sendesignal (s(t)) und das Empfangssignal (e(t)) vor dem Schwellwertvergleich quadriert werden.

7. Verfahren nach einem der Ansprüche 4 bis 6, **dadurch gekennzeichnet, dass** der Schwellwertvergleich in der Sende- und Empfangseinheit (1) durchgeführt wird.

8. Verfahren nach einem der Ansprüche 4 bis 7, **dadurch gekennzeichnet, dass** das binarisierte Sendesignal oder das binarisierte Echosignal oder beide binarisierten Signale jeweils einer Lauflängencodierung unterzogen werden und dass das oder die auf dieser Weise codierten Signale dem adaptiven Filter zugeführt werden.

9. Verfahren nach einem der vorhergehenden Ansprüche, **dadurch gekennzeichnet, dass** die Sendeleistung der Signale (3) in Abhängigkeit von einer mittleren Empfangsleistung der Echosignale (4) veränderbar, insbesondere reduzierbar ist.

10. Verfahren nach einem der vorhergehenden Ansprüche, **dadurch gekennzeichnet, dass** die Zeitintervalle zwischen jeweils zwei Pulsen des Signals (s(t)) in Abhängigkeit von der mittleren Empfangsleistung der Echosignale (e(t)) veränderbar ist.

**EP 1 049 945 B1**

11. Verfahren nach einem der vorhergehenden Ansprüche, **dadurch gekennzeichnet, dass** die von der Sendeeinheit (5) abgestrahlten und von der Empfangseinheit (6) empfangenen Signale (3, 4) Schallwellen beliebiger Wellenlänge, insbesondere Ultraschallwellen sind.

12. Verfahren nach einem der Ansprüche 1 bis 10, **dadurch gekennzeichnet, dass** die von der Sendeeinheit (5) abgestrahlten und von der Empfangseinheit (6) empfangenen Signale (3, 4) elektromagnetische Wellen beliebiger Wellenlänge, insbesondere aus dem Infrarotbereich, dem ultravioletten Bereich und dem Mikrowellenbereich sind.

13. Signal-Echo-Überwachungseinrichtung zur Durchführung des Verfahrens nach einem der vorhergehenden Ansprüche, **dadurch gekennzeichnet, dass** ein Signal (3) mit einer charakteristischen Signalform von einer Sendeeinheit (5) abgestrahlt wird, dass ein von einem Gegenstand (12) reflektiertes Echosignal (4) des abgestrahlten Signals (3) von einer Empfangseinheit (6) empfangen wird, dass das empfangene Echosignal (4) in ein elektrisches Empfangssignal (e(t)) umgesetzt wird, dass das Sendesignal (s(t)) gemeinsam mit dem Echosignal (e(t)) über ein in das Auswerteteil (10) integriertes adaptives Filter (14) ausgewertet wird, dass das Sendesignal (s(t)) von dem adaptiven Filter (14) gefiltert wird, dass das adaptive Filter seine Koeffizienten ($b_k$) so abgleicht, dass der Fehler zwischen dem gefilterten Sendesignal (y(t)) und dem Empfangssignal (e(t)) minimiert wird, und dass aus der Impulsantwort (b(t)) des adaptiven Filters (14) die Verzögerungszeit zwischen dem Sendesignal (s(t)) und dem Empfangssignal (e(t)) bestimmt wird.

14. Signal-Echo-Überwachungseinrichtung nach Anspruch 13, **dadurch gekennzeichnet, dass** das adaptive Filter (14) ein digitales Filter ist.

15. Signal-Echo-Überwachungseinrichtung nach Anspruch 14, **dadurch gekennzeichnet, dass** das adaptive Filter (14) ein FIR- (Finite-Impuls-Response) Filter ist.

16. Signal-Echo-Überwachungseinrichtung nach einem der Ansprüche 13 bis 15, **dadurch gekennzeichnet, dass** die Sendeeinheit (5) und die Empfangseinheit (6) als ein einziges Bauteil realisiert sind, das im zeitlichen Wechsel im Sendebetrieb und im Empfangsbetrieb verwendbar ist.

**Claims**

1. Ranging method, preferably in the case of motor vehicles with the aid of ultrasound pulses, in which a signal (3) with a characteristic signal shape is emitted by a transmitting unit (5), in which an echo signal (4) of the emitted signal (3) reflected from an object (12) is received by a receiving unit (6), in which the received echo signal (4) is converted into an electric received signal (e(t)), in which the transmitted signal (s(t)) is evaluated together with the echo signal (e(t)) via an adaptive filter (14) integrated in the evaluation section (10), in which the transmitted signal (s(t)) is filtered by the adaptive filter (14), in which the adaptive filter adjusts its coefficients ($b_k$) such that the error between the filtered transmitted signal (y(t)) and the received signal (e(t)) is minimized, and in which the delay time between the transmitted signal (s(t)) and the received signal (e(t)) is determined from the pulse response (b(t)) of the adapted filter (14).

2. Method according to Claim 1, **characterized in that** the characteristic signal shape of the transmitted signal (s(t)) is generated by a random number generator.

3. Method according to one of the preceding claims, **characterized in that** the transmitted signal (s(t)) and the received signal (e(t)) are led in each case via a non-linear transformation element (15, 16).

4. Method according to Claim 3, **characterized in that** the nonlinear transformation elements (15, 16) are respectively prescribed a threshold value which converts the transmitted signal (s(t)) and the received signal (e(t)) into binary signals.

5. Method according to Claim 4, **characterized in that** the binary signals are set to the value 1 only in the event of a positive traversal of the threshold value.

6. Method according to Claim 5, **characterized in that** the transmitted signal (s(t)) and the received signal (e(t)) are squared before the threshold value comparison.

7. Method according to one of Claims 4 to 6, **characterized in that** the threshold value comparison is carried out in the transmitting and receiving unit (1).

8. Method according to one of Claims 4 to 7, **characterized in that** the binarized transmitted signal or the binarized echo signal or both binarized signals are in each case subjected to run-length coding, and **in that** the signal or signals coded in this way/are fed to the adaptive filter.

9. Method according to one of the preceding claims, **characterized in that** the transmit power of the signals (3) can be varied, in particular can be reduced, as a function of a mean received power of the echo signals (4).

10. Method according to one of the preceding claims, **characterized in that** the time intervals between in each case two pulses of the signal (s(t)) can be varied as a function of the mean received power of the echo signals (e(t)).

11. Method according to one of the preceding claims, **characterized in that** the signals (3, 4) emitted by the transmitting unit (5) and received by the receiving unit (6) are sound waves of arbitrary wavelength, in particular ultrasound waves.

12. Method according to one of Claims 1 to 10, **characterized in that** the signals (3, 4) emitted by the transmitting unit (5) and received by the receiving unit (6) are electromagnetic waves of arbitrary wavelength, in particular from the infrared region, the ultraviolet region and the microwave region.

13. Signal/echo monitoring device for carrying out the method according to one of the preceding claims, **characterized in that** a signal (3) with a characteristic signal shape is emitted by a transmitting unit (5), **in that** an echo signal (4), reflected from an object (12), of the emitted signal (3) is received by a receiving unit (6), **in that** the received echo signal (4) is converted into an electric received signal (e(t)), **in that** the transmitted signal (s(t)) is evaluated together with the echo signal (e(t)) via an adaptive filter (14) integrated in the evaluation section (10), **in that** the transmitted signal (s(t)) is filtered by the adaptive filter (14), **in that** the adaptive filter adjusts its coefficients ($b_k$) such that the error between the filtered transmitted signal y(t)) and the received signal (e(t)) is minimized, and **in that** the delay time between the transmitted signal (s(t)) and the received signal (e(t)) is determined on the pulse response (b(t)) of the adaptive filter (14).

14. Signal-echo monitoring device according to Claim 13, **characterized in that** the adaptive filter (14) is a digital filter.

15. Signal-echo monitoring device according to Claim 14, **characterized in that** the adaptive filter (14) is an FIR (Finite Impulse Response) filter.

16. Signal-echo monitoring device according to one of Claims 13 to 15, **characterized in that** the transmitting unit (5) and the receiving unit (6) are implemented as a single assembly which can be used in temporal succession in transmit mode and in receive mode.

**Revendications**

1. Procédé de mesure de distances, notamment pour des véhicules, avec des impulsions d'ultrasons, selon lequel
on émet un signal (3) avec une forme de signal caractéristique à l'aide d'une unité d'émission (5),
on reçoit le signal d'écho (4) du signal émis (3) réfléchi par un objet (12) dans une unité de réception (6),
on convertit le signal d'écho (4) reçu en un signal de réception électrique (e(t)),
le signal d'émission (s(t)) étant exploité en commun avec le signal d'écho (e(t)) par un filtre adaptatif (14) intégré dans la partie d'exploitation (10),
le signal d'émission (s(t)) étant filtré par le filtre adaptatif (14),
le filtre adaptatif (14) équilibre ses coefficients ($b_K$) pour minimiser l'erreur entre le signal d'émission filtré (y(t)) et le signal de réception (e(t)),
à partir du mot impulsionnel (b(t)) du filtre adaptatif (14), on détermine la durée de temporisation entre le signal d'émission (s(t)) et le signal de réception (e(t)).

2. Procédé selon la revendication 1,
**caractérisé en ce qu'**
on génère la forme caractéristique du signal d'émission (s(t)) par un générateur aléatoire.

**3.** Procédé selon l'une quelconque des revendications précédentes,
   **caractérisé en ce qu'**
   on fait passer le signal d'émission (s(t)) et le signal de réception (e(t)) par un élément de transformation non linéaire (15, 16).

**4.** Procédé selon la revendication 3,
   **caractérisé en ce que**
   les éléments de transformation non linéaires (15, 16) ont un seuil prédéterminé qui transforme le signal d'émission (s(t)) et le signal de réception (e(t)) en signaux binaires.

**5.** Procédé selon la revendication 4,
   **caractérisé en ce que**
   les signaux binaires sont mis à la valeur (1) seulement pour un passage positif du seuil.

**6.** Procédé selon la revendication 5,
   **caractérisé en ce que**
   le signal d'émission (s(t)) et le signal de réception (e(t)) sont mis au carré avant la comparaison avec le seuil.

**7.** Procédé selon l'une quelconque des revendications 4 à 6,
   **caractérisé en ce que**
   la comparaison des valeurs de seuil est effectuée dans une unité d'émission et de réception (1).

**8.** Procédé selon l'une quelconque des revendications 4 à 7,
   **caractérisé en ce que**
   le signal d'émission transformé en signal binaire ou le signal d'écho transformé en signal binaire ou les deux signaux binaires sont soumis chaque fois à un codage de longueur de parcours et **en ce que** le ou les signaux codés de cette manière sont appliqués au filtre adaptatif.

**9.** Procédé selon l'une quelconque des revendications précédentes,
   **caractérisé en ce que**
   la puissance d'émission des signaux (3) est variable en fonction d'une puissance de réception moyenne des signaux d'écho (4), et notamment elle peut être réduite.

**10.** Procédé selon l'une quelconque des revendications précédentes,
   **caractérisé en ce que**
   les intervalles de temps entre chaque fois deux impulsions du signal (s(t)) sont variables en fonction de la puissance de réception moyenne des signaux d'écho (e(t)).

**11.** Procédé selon l'une quelconque des revendications précédentes,
   **caractérisé en ce que**
   les signaux (3, 4) émis par l'unité d'émission (5) et reçus par l'unité de réception (6) sont des ondes sonores de longueurs d'ondes quelconques, notamment des ondes d'ultrasons.

**12.** Procédé selon l'une quelconque des revendications 1 à 10,
   **caractérisé en ce que**
   les signaux (3, 4) émis par l'unité d'émission (5) et reçus par l'unité de réception (6) sont des ondes électromagnétiques de longueurs d'ondes quelconques notamment dans le domaine infrarouge, dans le domaine ultraviolet et dans le domaine des micro-ondes.

**13.** Installation de surveillance de signaux d'écho pour la mise en oeuvre du procédé selon l'une quelconque des revendications précédentes,
   **caractérisée en ce que**
   le signal (3) est émis avec une forme de signal caractéristique par une unité d'émission (5), le signal d'écho (4) du signal émis (3), réfléchi par un objet (12), est reçu par une unité de réception (6),
   le signal d'écho (4) reçu est converti en un signal de réception électrique (e(t)), le signal d'émission (s(t)) est exploité en commun avec le signal d'écho (e(t)) par un filtre adaptatif (14) intégré dans la partie d'exploitation (10), le signal d'émission (s(t)) est filtré par le filtre adaptatif (14), on compense les coefficients ($b_k$) du filtre adaptatif pour minimiser l'erreur entre le signal d'émission filtré (y(t)) et le signal de réception (e(t)) et on détermine, à partir de la réponse impulsionnelle (b(t)) du filtre adaptatif (14), le temps de retard entre le signal d'émission (s(t)) et le signal de réception (e(t)).

**14.** Installation selon la revendication 13,
   **caractérisée en ce que**
   le filtre adaptatif (14) est un filtre numérique.

**15.** Installation selon la revendication 14,
   **caractérisée en ce que**
   le filtre adaptatif (14) est un filtre à réponse impulsionnelle finie (filtre FIR).

**16.** Installation selon l'une quelconque des revendications 13 à 15,
   **caractérisée en ce que**
   l'unité d'émission (15) et l'unité de réception (6) sont constituées par un seul composant utilisé alternativement en mode d'émission et en mode de réception.

Fig. 1

Fig. 2

Fig. 3

Fig. 4